# EUROPEAN PATENT APPLICATION

(11) **EP 3 404 555 A1**
(43) Date of publication of application: **21.11.2018**
(21) Application number: 17738130.8
(22) Date of filing: 10.01.2017
(51) Int. Cl.: G06F 17/28

(54) **SPEECH CONVERTER**

(30) Priority: 11.01.2016 CN 201610013073
(71) Applicant: Chen, Yong, Deyang, Sichuan 618200 (CN)
(72) Inventor: Chen, Yong, Deyang, Sichuan 618200 (CN)
(74) Representative: Cabinet Chaillot
(86) International application number: PCT/CN2017/070802
(87) International publication number: WO 2017/121316

(57) **Abstract**

A speech converter, comprising: translating between Chinese and the written form of a counterpart official language, wherein a correspondence between characters, words and sentences that accurately convey a same meaning is established, producing correspondence cards; further adding corresponding phrases, clauses and useful expressions, also producing correspondence cards. Correspondence cards are ones in which the Chinese and the counterpart official language accurately convey the same meaning. Thus, a large-scale software architecture can be achieved, and the defined correspondence cards, correspondence repository and software can be filled into the software architecture, to form a text and speech translation software for use between various world languages, establishing among world languages an international communication system at one's fingertip that requires no special learning.

## Description

### Technical Field

The present invention relates to the field of software and electrical appliances, in particular to a speech converter.

### Background

Every country has an official standard language and local dialects. Pronunciations expressing the same meaning are very different. Objectively, this brings barriers to accurate translation. In one country, an official language and official words are universally acknowledged to express same meanings. Now that the official words are universally acknowledged cornerstones to express the same meanings, the accurate translation should be based on the cornerstones. A reason why such translation has not been popularized in a realistic society is that no computer, mobile phone, intelligent electrical appliance, software, network and the like exist.

In the realistic society, the official languages of all the countries can be input into computers. Furthermore, a large number of simplified input methods are generated, so that word groups, short sentences and useful expressions are convenient to generate and input, leading to an important contribution. For the languages of two countries, if their words, phrases and sentences with the same meanings are mutually matched, and then word groups, short sentences and useful expressions with the same meanings are also mutually matched and added, the translation mode must be faster and more accurate than an old mode.

There are many translation tools nowadays, but no tool can directly translate mandarin into languages of other countries. If someone can translate what he/she wants to say into a language that a listener can understand immediately with a tool, the tool will be more convenient for communication and higher in practicability, and has a stronger tangible function of clearing away a language barrier.

### Technical Problem of the Invention

The present invention aims to enable a user to translate what he/she wants to say into a language that a listener can understand immediately with the present invention, so that the listener can hear and understand these words and answer immediately, and the answer is sent back with mandarin.

### Technical Solution

A speech converter includes inter-translation between Chinese and official words of the other party and connection of one word, one phrase and one sentence. The speech converter is characterized by further including: forming matches of words, phrases and sentences for accurately expressing same meanings, generating match cards, then adding matches of word groups, short sentences and useful expressions, and also generating match cards. The match cards include a word match card, a phrase match card, a word group match card, a short sentence match card, a useful expression match card and a one-sentence match card which are generated by corresponding words, phrases, word groups, short sentences, useful expressions and sentences used for accurately expressing the same meanings in Chinese and the official language of the other party. More generalized or narrower matches and match cards may be further generated as required.

Preferably, the match cards of the speech converter have the characteristic of unidirectionality. The unidirectionality of the match cards is that one match card is generated from Chinese to the official words of the other party, and another match card is generated from the official words of the other party to Chinese.

Preferably, the match cards of the speech converter have the characteristic of a use mode. The use mode of the match cards is that: the match card from Chinese to the official words of the other party is used for translating Chinese into the official words of the other party, and the match card from the official words of the other party to the Chinese is used for translating the official words of the other party into the Chinese.

Preferably, the corresponding card of the speech converter is characterized by one-to-one correspondence and one-to-one correspondence, and the one-to-one correspondence and the one-to-one correspondence fully consider one word, one word, one phrase, one short sentence, A common language and a sentence may be in correspondence with the other language. In addition to the unique correspondence of one to one that expresses only one meaning, there are also correspondences that express several different meanings. Correspondences of different meanings are listed, and such correspondences form one-to-one correspondence and one-to-one correspondence.

If the number of matches in a match library is larger, translations are timelier and more accurate, and a user feels more convenient, resulting in changes in the matches from quantitative changes to qualitative changes. New matches are continuously added to adapt to a requirement caused by the development of times for language innovation. The main force for innovation must be the users themselves.

Beneficial effects are that: although it is extremely accurate to translate with words and phrases, it is very difficult to communicate with the words and the phrases. When hardware such as computers, mobile phones, intelligent electrical appliances and networks and software come out, the match cards have become new media for accurate and timely translation by adopting the word matches and the phrase matches and adding a large number of the word group matches, the short sentence matches, the useful expression matches and the one-sentence matches, and an optimal new way is provided for word translation.

The speech converter includes match cards, and further includes match libraries. Matches formed by two types of words during translation form a match library. The match library includes an instruction match library, and sequencing is performed in the match library. The match library is formed by putting the match cards with certain features together. The match library with a single feature also may be a sub-match library in a match library with various features.

Preferably, the match library formed by the matches of two types of words during translation includes match cards. The same type of match cards are put together to form the match library. The match cards include the word match card, the phrase match card, the word group match card, the short sentence match card, the useful expression match card and the one-sentence match card which are generated by corresponding words, phrases, word groups, short sentences, useful expressions and sentences used for accurately expressing the same meanings in Chinese and the official language of the other party. Putting of the same type of match cards together to form the match library is to put all the match cards from Chinese to the official words of the other party together to form one match library, and then put all the match cards from the official words of the other party to Chinese together to form another match library, so that the two cooperating match libraries form a translation library from Chinese to words of one of other countries.

Preferably, the instruction corresponding library in the corresponding library is further characterized in that the corresponding correspondences in the corresponding library are grouped together to form an instruction corresponding library; and the corresponding correspondences in the corresponding library are collectively combined. The component corresponding to the library is a part of the corresponding library and has a special purpose.

Preferably, the sorting in the corresponding library is further characterized by alphabetical ordering; the alphabetical ordering, the corresponding arrangement of the English before, should not be difficult to understand; the corresponding arrangement of the Chinese precedence It is arranged in pinyin letters; the correspondence of the texts of other countries is also arranged in the way of Chinese.

Beneficial effects are that: with the word match library, during translation, the matches are convenient and quick to retrieve and apply. With the instruction match library, it is necessary to narrow the range of the match library and normalize instruction languages, so that retrieval and application of electrical devices are facilitated. For the sequencing in the match library, a sequencing mode for the matches in the match library is specified, so as to avoid disorder.

A speech converter includes a corresponding library, and is further characterized by a conversion method thereof. The conversion method is first converted from voice to Chinese, and translated into a corresponding counterpart text by the corresponding card in the corresponding library, and the other party text It is read by the other party's reader in the other's language; the other time, it is the interaction of a voice conversion.

Conversion from a speech into Chinese includes: a voice control recording method and a manual recording method, and further includes Wubi, Pinyin and handwriting.

Beneficial effects are that: in order to timely and accurately convert the speech, the method builds a channel/way.

The speech converter includes a conversion method of the speech converter, and is characterized by realizing word-to-word conversion, including a direct word-to-word conversion and a word-to-word conversion by an analogy method. The word-to-word conversion is to translate words of two countries by using the match library.

The speech converter includes the match library and the conversion method of the speech converter, and is characterized in direct word-to-word conversion, including: a method for directly generating words of the other party, a solution for enabling an input sentence to accord with the grammar, a literal translation method, a method for generating a new match card to determine a minimum translation unit, a sentence pattern selection method during literal translation, and a method for generating a new match card by using a literal translation mode. The direct word-to-word conversion is a translation mode for directly obtaining a result by using the match cards in the match library.

Preferably, a speech converter directly realizes conversion between characters, wherein the corresponding card directly generates a counterpart text, and the corresponding card directly generates a counterpart text, which is a Chinese input by the user, and is corresponding to the library. Some, through the corresponding card, directly correspond to the official text of the other party; the official text of the other party also directly generates Chinese with the corresponding card.

Preferably, a speech converter directly implements conversion between characters, so that the input sentence conforms to a grammatical solution, and is characterized in that the spoken language is changed into a written language; the spoken language is changed into a written language, which is locality. The language is changed to the language understood by the public, including the narrative method; the sentence input by the user does not correspond to the Chinese part of the corresponding card in the library, and the Chinese part corresponding to the input sentence does not correspond to the Chinese part. The translation is directly translated by the software. Make sentences into grammatical, normative sentences.

Preferably, the direct word-to-word conversion by the speech converter is the literal translation method, which is further characterized by labeling geographical names and personal names. Labeling of the geographical names and the personal names has the advantage of automatic transliteration during literal translation.

Preferably, the direct word-to-word conversion by the speech converter is the method for generating a new match card to determine a minimum translation unit, which is further characterized by following a sequence of a short sentence, a word group, a phrase and a word generated according to a rule from large to small and the sequence is a preferable sequence of translation units or single words. During generation of a new sentence match card, if a new sentence contains a short sentence of a short sentence match card, firstly, the short sentence is the minimum unit, so that translation is performed with the short sentence match card. If the new sentence contains a word group of a word group match card, the word group is the minimum unit, so that translation is performed with the word group match card in the match library. If the new sentence contains a phrase of a phrase match card, the phrase is the minimum unit, so that translation is performed with the phrase match card in the match library. Finally, the word is the minimum unit, so that translation is performed with a word match card. All the minimum units are connected together according to the original sequence, thereby generating the new sentence match card.

Preferably, the direct word-to-word conversion by the speech converter is the sentence pattern selection method during literal translation, which is further characterized by selecting a sentence pattern for an input sentence. During generation of the new match card, the sentence pattern is selected for the input sentence, so as to improve the accuracy of the literal translation.

Preferably, a speech converter directly implements conversion between characters, and a method for generating a new corresponding card by means of literal translation, and is characterized in that it is translated by a subject, a predicate, an object, an attribute, an adverbial; , predicate, object, attributive, adverbial to translate, is a grammatical translation, is a way of translation.

Preferably, a speech converter directly implements conversion between characters, and a method for generating a new corresponding card by artificial intelligence, and is characterized in that it is translated by artificial intelligence; the translation is performed by using main artificial intelligence. Intelligent translation is a method of translation.

Beneficial effects are that: the most accurate and most convenient words of the other party are directly generated through the match cards. During literal translation, automatic transliteration may be realized. What a typing person means may be fully expressed, and new matches are also convenient to generate. The sentence pattern is defined for the input sentence to improve the accuracy of the literal translation, so that newly generated matches are high in accuracy.

The speech converter includes the match library and the conversion method of the speech converter, and is further characterized by realizing the word-to-word conversion by an analogy method, including: complete retrieval for retrieving the match library, a method for retrieving keywords in the match library, a method for judgment and retrieval according to a subject-predicate-object relation in a short sentence, and a method for retrieving matches with same phrases as many as possible in the match library. The analogy method for realizing the word-to-word conversion is to find out analogous matches with the match cards in the match library through retrieval and comparison methods, so as to realize a translation method of words.

Preferably, a speech converter realizes conversion between characters by using an analogy method, and the corresponding intra-database retrieval is a complete retrieval, and is also characterized in that the corresponding retrieval part is searched for an exact matching correspondence; The search part is the correspondence of the exact match, and the corresponding part of the search part is the exact match, which is the matching result, and the matching result is the preset plan in the search library.

Preferably, a speech converter implements conversion between characters by using an analogy method, and a method for keyword search in a corresponding library is characterized in that all the corresponding keywords are retrieved; The words with the same words are all retrieved. The sentences entered by the user are not in the Chinese corresponding library. The computer proposes sentences in the library that are similar to the input sentences for the user to select. The search method is: The keywords are the same.

Preferably, the speech converter realizes the word-to-word conversion by the analogy method, which is the method for judgment and retrieval according to a subject-predicate-object relation in a short sentence, and is further characterized by retrieving matches with same subjects, predicates and objects. During retrieval of the matches with the same subjects, predicates and objects, if a sentence input by a user has no match in the Chinese word match library, the computer indicates that there are sentences basically according with the input sentence in the library for selection and use by the user. A specific retrieval method is: subject-predicate-object retrieval.

Preferably, the speech converter realizes the word-to-word conversion by the analogy method, which is a method for retrieving matches with same phrases as many as possible in the match library, and is further characterized by retrieving matches with the most same phrases. During retrieval of the matches with the most same phrases, if a sentence input by a user has no match in the Chinese word match library, the computer indicates that there are sentences basically according with the input sentence in the library for selection and use by the user. The retrieval method is that: the number of same phrases is the largest.

Beneficial effects: identical matches may be used immediately to realize the most accurate and most convenient translation mode. When a non-matching phenomenon occurs in a phrase library matching process, synonymic words, phrases and sentences are retrieved from the match library to re-put non-matching results. When a non-matching result occurs in a retrieving process, a retrieval result may be described by an optimal mode.

A speech converter, comprising implementing conversion between words, further characterized by adding a computer, a scanner and a post-scan text conversion software, a Chinese reading software, the adding computer, the scanner and the scanned text thereof The conversion software and Chinese reading software are the storage devices and necessary tools of the present invention.

Beneficial effects: a reader may directly read original texts of other countries.

The speech converter is further characterized in that for the conversion method, computers, mobile phones, electrical appliance devices and networks in the aspect of hardware are added, and word recording software, voice reading software and required application software in the aspect of software are also added. The computers, the mobile phones, the electrical appliance devices and the networks in the aspect of hardware are storage devices of the present invention. The word recording software, voice reading software and required application software in the aspect of software are necessary tools for implementing the present invention, and are installed on the hardware. Through the speech converter, a user inputs what he/she wants to say into the hardware through the software to form Chinese, and then the Chinese are converted into words of the other party through the match cards. A reader for the words of the other party reads the words in a language of the other party through the above-mentioned hardware, and this operation is performed in the opposite way, thereby realizing interaction of speech conversion, thereby realizing interaction of speech conversion.

Preferably, the method for adding a corresponding card online is characterized in that it is online for help, and the online help is a written language that is input by the user, but is not in the corresponding library, and can be accessed online to seek help from friends on the network. You can also ask questions, you can pay for the person to translate immediately, compile a new corresponding card, and use it immediately.

Preferably, a use method for a one-to-multiple match card is characterized by displaying matches of different meanings conversely for selection by a user. The operation of displaying the matches of different meanings conversely for selection by the user is that the match cards, such as the word match card, the phrase match card, the word group match card, the short sentence match card, the useful expression match card and the one-sentence match card, include a one-to-multiple match card capable of expressing several different meanings in addition to a one-to-one match card capable of only expressing one meaning. At this time, match contents of different meanings are required to be displayed conversely to remind a typing person to make a determination, so that the typing person may determine such a match content that may accurately express own meanings and confirm the match content, and conversely, words of other countries are required to be normalized and connected with Chinese. When the words of one country and the Chinese form the one-to-multiple match cards, a prompt will be also provided to let people from the country to select and determine the contents.

Beneficial effects are that: a real product is used for realizing the speech conversion, so that people using different languages may chat with one another timely with their own languages, thereby basically clearing away the language barrier. Persons who are learning foreign languages may carry a foreign language teacher who may speak standard languages. In a continuous use process, users may subconsciously make their language habits more standardized and correct the pronunciations of their own standard languages, so as to make their standard language more standard.

A speech converter is further characterized in that, in the above technical solution, artificial intelligence is added, including: intelligently providing reference materials, smart having default selection, intelligently arranged in front, smart with emotion, and adding artificial The intelligence is to let the speech converter know the user's heart very well, execute the program automatically, and provide and solve the problem intelligently and voluntarily and self-improvement, among them:

The intelligent providing reference material is characterized in that the reference material is provided, and the reference material is provided. When the input user needs the reference material, the artificial intelligence of the speech converter has a reference content that meets the user's requirements.

The smart has a default selection, which is characterized by a default selection, the default selection, when the inputter is in need of selection, the artificial intelligence of the speech converter has the default selection that best meets the input requirements of the input.

The smart arrangement is preceded by the prior arrangement, and the arrangement is forward. When the artificial intelligence of the speech converter has no default selection, the option that best meets the input requirements is ranked first;

Intelligence has emotions, which are characterized by language emotions, which are accompanied by language emotions. When the voice reading software is reading, you can know the meaning of the input person, and the voice of the recitation reflects the sensation, the emotion, and the accuracy. Express the emotions of the input, and in turn listen to others.

Preferably, artificial intelligence of the speech converter is characterized in automatic adding. The automatic adding means that every time a match card generated by new matches is used by the user, the artificial intelligence will automatically record and add the match card into the match library for use at the next time.

Preferably, the artificial intelligence of the speech converter is characterized by automatic communication, and the automatic communication is artificial intelligence of the speech converter, and automatically establishes an communication channel between the user and the software official website, and the user uses A new corresponding card, artificial intelligence automatically transmits this information to the official website of the software, in order to facilitate the identification of the corresponding card and the increase of the corresponding library of the website. The official website of the software also regularly upgrades the corresponding library of each speech converter, which is beneficial to the operator. Take good care.

Beneficial effects are that: an upgraded speech converter product becomes a translation robot which accords with the human interest at most, does not participate in a talk of two parties, and is particularly confidential, so that this product is a necessity for exotic travelers and merchants and is popular in lovers from different countries. This product may be used in a secret conversation between heads of two countries, and is more significant.

The speech converter is characterized by labeling a match generation type with a color, including: a method for labeling matches confirmed by official software with specific colors, a method for displaying new matches generated by the artificial intelligence with specific colors and a method for expressing matches literally translated by a user through phrases and words with specific colors. The labeling of a match generation type with a color is to display match cards generated by different modes with different colors.

Preferably, the method for labeling matches confirmed by a website with specific colors is further characterized by displaying the confirmed matches with specific colors. In the method of displaying the confirmed matches with the specific colors, there are various matches in software. To visually distinguish the matches, the confirmed matches in the software are displayed with the specific colors, and then are sent to other party, so that the other party may definitely know immediately that this sentence is correct.

Preferably, the method for displaying the new matches generated by the artificial intelligence with the specific colors is further characterized by displaying the matches generated by the artificial intelligence with the specific colors. In the method of displaying the matches generated by the artificial intelligence with the specific colors, there are various matches in software. To visually distinguish the matches, the matches generated by the artificial intelligence in the software are displayed with the specific colors, and then are sent to other party, so that the other party may definitely know immediately that this sentence is translated by the artificial intelligence, and may ask anything unclear or inaccurate.

Preferably, the method for expressing a specific color by translating words and words into a specific color is further characterized by displaying a literal translation corresponding to a specific color; and displaying the literal translation corresponding to the specific color, there are many kinds of correspondences in the software. In order to visually distinguish, the corresponding translation is used to display the literal translation in the software, and it is sent to the other party. The other party immediately knows it clearly. This sentence is assembled by the user himself. The content to be said is said, right? I don't know, the accuracy is the worst.

Beneficial effects are that: the matches displayed with the specific colors may accurately tell other party the accuracy of this sentence. A match confirmed by the official software is the most accurate, and a match translated by the artificial intelligence is basically accurate, and a match translated by scrape together by the user is lowest in credibility of the accurate.

A speech converter is further characterized by a method for collecting a corresponding card, wherein the corresponding collection method is to give more than one time reward to all people; that is, the user provides a qualified correspondence to the software official. Cards, you can use more than one corresponding card for free, or you can use the corresponding use time or traffic. Free use can also be exchanged with other users under the official management of the software.

Beneficial effects are that: the number of the match cards in the match library may be increased quickly. It is also a way to make money.

The speech converter is further characterized in an application. By use of the methods, the steps and the technical solutions of the present invention, the application includes: application I: all words in the world may be input into languages of the computer to build a way for mutually direct word translation and speech conversion; application II: the speech converter becomes universal translation software for all words and speeches in and between all the countries; application III: the speech converter is manufactured into a native translation machine for translating one language into a language of one country and translating one language into languages of several countries; application IV: the speech converter enables dialect speakers in different places to understand each other; application V: the speech converter clears the final language barrier to make the online shopping in China become unique online shopping in the world.

Beneficial effects are that: interconnection and intercommunication of all the languages are realized. When people in the world travel around the world, most of the problems caused by the language barrier may be solved in any places having official words, but the speech converter is useless for people who may not type local words.

### Advantageous effects of the invention

### Beneficial effect

Type a paragraph of beneficial effects description here.

### Brief description of the drawing

### DRAWINGS

The description paragraphs are entered here by way of a drawing.

### BEST MODE FOR CARRYING OUT THE INVENTION

### Optimal Implementation mode of the Invention

A detailed description will be made below to the present invention to clearly and completely describe technical solutions in embodiments of the present embodiment. Obviously, the described embodiments are merely part of the embodiments of the present invention and not all the embodiments. Based on the embodiments of the present invention, all other embodiments obtained by those ordinarily skilled in the art without paying creative work shall fall within the protection scope of the present invention.

### Specific Embodiment 1

A speech converter includes inter-translation between Chinese and official words of the other party and connection of one word, one phrase and one sentence. The speech converter is characterized by further including: forming matches of words, phrases and sentences for accurately expressing same meanings, generating match cards, then adding matches of word groups, short sentences and useful expressions, and also generating match cards.

The present embodiment is further configured that: the match cards include a word match card, a phrase match card, a word group match card, a short sentence match card, a useful expression match card and a one-sentence match card which are generated by corresponding words, phrases, word groups, short sentences, useful expressions and sentences which are used for accurately expressing the same meanings in Chinese and the official language of the other party. More generalized or narrower matches and match cards may be further generated as required.

### Specific Embodiment 2

The match cards of the speech converter have the characteristic of unidirectionality.

The present embodiment is further configured that: the unidirectionality of the match cards is that one match card is generated from the Chinese to the official words of the other party, and another match card is generated from the official words of the other party to the Chinese.

### Specific Embodiment 3

According to the speech converter, the match cards of the speech converter have the characteristic of a use mode.

The present embodiment is further configured that: the use mode of the match cards is that: the match card from the Chinese to the official words of the other party is used for translating the Chinese into the official words of the other party, and the match card from the official words of the other party to the Chinese is used for translating the official words of the other party into Chinese.

### Specific Embodiment 4

According to the speech converter, the match card of the speech converter is characterized by including a one-to-one match and one-to-several match.

This embodiment is further configured to: the one-to-one correspondence and the one-to-one correspondence, fully considering a word, a word, a phrase, a short sentence, a common phrase, a sentence may be in correspondence with the other language In addition to the one-to-one correspondence that only expresses one meaning, there is also a correspondence that expresses several different meanings. It is necessary to list all the corresponding meanings of different meanings. There is a one-to-one correspondence, and there are also a few correspondences.

If the number of matches in a match library is larger, translations are timelier and more accurate, and a user feels more convenient, resulting in changes in the matches from quantitative changes to qualitative changes. New matches are continuously added to adapt to a requirement caused by the development of times for language innovation. The main force for innovation must be the users themselves.

A working principle is that: a content to be translated is directly translated into words of the other party through the word match, the phrase match, the word group match, the short sentence match, the useful expression match and the one-sentence match. If there is no match, the content is decomposed into several small units. If there is still no match, the small units are decomposed again till a match is found, and then the words of the other party are displayed.

### Specific Embodiment 5

The speech converter includes match cards, and is characterized by further including match libraries. Matches formed by two types of words during translation form a match library. The match library includes an instruction match library, and sequencing is performed in the match library.

The present embodiment is further configured that: the match library is formed by putting the match cards with certain features together. The match library with a single feature also may be a sub-match library in a match library with various features.

A working principle is that: one type of matches is generated from all Chinese to the official words of the other party, and these matches are put together to form one match library. Another type of matches is generated from all official words of the other party to Chinese, and these matches are put together to form one match library. If Chinese is required to be translated into other languages, retrieval is performed in the Chinese word match library. If the official language of the other party is required to be translated into Chinese, retrieval is performed in the match library from the official words of the other party to the Chinese.

### Specific Embodiment 6

According to the match library of the speech converter, the match library formed by the matches of two types of words during translation includes match cards. The same type of match cards are put together to form the match library. The match cards include the word match card, the phrase match card, the word group match card, the short sentence match card, the useful expression match card and the one-sentence match card which are generated by corresponding words, phrases, word groups, short sentences, useful expressions and sentences which are used for accurately expressing the same meanings in Chinese and the official language of the other party. Putting the same type of match cards together to form the match library is to put all the match cards from the Chinese to the official words of the other party together to form one match library, and then put all the match cards from the official words of the other party to the Chinese together to form another match library, so that the two cooperating match libraries form a translation library from the Chinese to words of one of other countries.

A working principle is that: one type of matches is generated from all Chinese to the official words of the other party, and these matches are put together to form one match library. Another type of matches is generated from all official words of the other party to Chinese, and these matches are put together to form one match library. If Chinese is required to be translated into other languages, retrieval is performed in the Chinese word match library. If the official language of the other party is required to be translated into Chinese, retrieval is performed in the match library from the official words of the other party to the Chinese.

### Specific Embodiment 7

According to a corresponding library of the speech converter, the instruction corresponding library in the corresponding library is further characterized in that the corresponding correspondences in the corresponding library are grouped together to form an instruction corresponding library.

The embodiment is further configured to: the corresponding correspondences in the corresponding library are grouped together to form a corresponding library of instructions, which is a part of the corresponding library and has a special purpose.

A working principle is that: when a person has a man-machine conversation with an electrical device, an instruction is sent according to the matches in the instruction match library, so that the electrical device may understand most easily and then make the most accurate and quickest response.

### Specific Embodiment 8

According to a corresponding library of a speech converter, the sorting in the corresponding library is further characterized by alphabetical ordering; the alphabetical ordering, the corresponding arrangement of the English in front should be easy to understand; The corresponding arrangement in Chinese is arranged in pinyin letters; the correspondence of the characters in other countries is also arranged in the Chinese way.

Working principle: the correspondence of each corresponding library is arranged in the order of the letters of the preceding text.

### Specific Embodiment 9

A speech converter comprising a corresponding library, further characterized by a conversion method thereof.

The embodiment is further configured to: the conversion method is first converted from voice to Chinese, and translated into a corresponding counterpart text by corresponding Chinese in the corresponding library, and the other party's text is used by the other party's reader. Language readout; the other time, it is the interaction of a voice conversion.

Voice conversion into Chinese: including voice input method and manual input method, including five strokes, pinyin, handwriting.

Working principle: You can input the words you want to say into Chinese, and directly generate the other party's words by word correspondence, word correspondence, phrase correspondence, short sentence correspondence, common language correspondence, and one sentence correspondence. The reader reads in the other's language, letting the other party hear the sound that can be understood; the other party has to say something, and do it once.

### Specific Embodiment 10

The speech converter includes a conversion method of the speech converter, and is further characterized by realizing word-to-word conversion, including directly realizing the word-to-word conversion and realizing the word-to-word conversion by an analogy method.

The present embodiment is further configured that: the realizing of the word-to-word conversion is to translate words of two countries by using the match library.

A working principle is that: Chinese are correspondingly translated into words of the other party through the match cards in the match library. If there is no such match cards, new ones are generated through matches. Words of the other party are also translated into Chinese through the match cards in the match library. If there is no such match cards, new ones are generated through matches. Therefore, the scrip-to-script conversion is realized.

### Specific Embodiment 11

The realizing of the word-to-word conversion by the speech converter is further characterized by directly realizing the word-to-word conversion, including: a method for directly generating words of the other party, a solution for enabling an input sentence to accord with the grammar, a literal translation method, a method for generating a new match card to determine a minimum translation unit, a sentence pattern selection method during literal translation, and a method for generating a new match card by using a literal translation mode.

The present embodiment is further configured that: the direct realizing of the word-to-word conversion is a translation mode for directly obtaining a result by using the match cards in the match library.

A working principle is that: words of the other party are directly generated through the match cards, and the match cards are generated by a user self by the literal translation mode.

### Specific Embodiment 12

The direct realizing of the word-to-word conversion by the speech converter is characterized by directly generating words of the other party through the match cards.

The embodiment is further configured to: directly generate a counterpart text by using the corresponding card, which is a Chinese input by the user, and is corresponding to the library, and directly corresponds to the official text of the other party through the corresponding card; The corresponding card directly generates Chinese.

A working principle is that: official words of the other party are directly obtained through the matches.

### Specific Embodiment 13

The direct realizing of the word-to-word conversion by the speech converter is the solution for enabling the input sentence to accord with the grammar, and is further characterized by changing a spoken language into a written language.

The embodiment is further configured to: the spoken language is changed into a written language, that is, the local language is changed into a language understood by the public, including a narrative mode; the sentence input by the user does not correspond to the Chinese part of the corresponding card in the library. Curry also does not correspond to the Chinese part that basically corresponds to the input sentence. To translate directly through the software, first make the sentence into a grammatical and normative sentence.

Working principle: People's spoken sentences, not every sentence is written language, the local knowledge is changed to be understood by everyone, including the narrative method; the sentence entered by the user, not in the Chinese language library, the computer It is suggested that there is no sentence in the Curry that is basically consistent with the input sentence. To directly translate through the software, the sentence must first be changed into a grammatical and normative sentence.

### Specific Embodiment 14

The direct realizing of the word-to-word conversion by the speech converter is the literal translation method, which is further characterized by labeling geographical names and personal names.

The present embodiment is further configured that: labeling of the geographical names and the personal names has the advantage of automatic transliteration during literal translation.

A working principle: labeling of the geographical names and the personal names has the advantage of automatic transliteration during literal translation.

### Specific Embodiment 15

The direct realizing of the word-to-word conversion by the speech converter is the method for generating a new match card to determine a minimum translation unit, which is further characterized by following a short sentence, word group, phrase and word sequence which is generated according to a rule from large to small.

The present embodiment is further configured that: the short sentence, word group, phrase and word sequence which is generated according to the rule from large to small is a preferable sequence of translation units or single words. During generation of a new sentence match card, if a new sentence contains a short sentence of a short sentence match card, firstly, the short sentence is the minimum unit, so that translation is performed with the short sentence match card. If the new sentence contains a word group of a word group match card, the word group is the minimum unit, so that translation is performed with the word group match card in the match library. If the new sentence contains a phrase of a phrase match card, the phrase is the minimum unit, so that translation is performed with the phrase match card in the match library. Finally, the word is the minimum unit, so that translation is performed with a word match card. All the minimum units are connected together according to the original sequence, thereby generating the new sentence match card.

A working principle is that: if no match is retrieved in the match library, new matches are required to be created. During creating of new sentence matches, the short sentence, word group, phrase and word sequence which is generated according to the rule from large to small is followed, which is a preferable sequence of translation units or single words. If there is a short sentence match, short sentences, word groups in the match library, then phrases in the match library and finally words are used in sequence.

### Specific Embodiment 16

The direct realizing of the word-to-word conversion by the speech converter is the sentence pattern selection method during literal translation, which is further characterized by selecting a sentence pattern for an input sentence.

The present embodiment is further configured that: during generation of the new match card, the sentence pattern is selected for the input sentence, so as to improve the accuracy of the literal translation.

### Specific Embodiment 17

A method for generating a new corresponding card by means of literal translation according to a direct conversion of a speech converter, which is characterized in that it is translated by a subject, a predicate, an object, an attribute, and an adverbial.

The embodiment is further configured to: the subject, the predicate, the object, the attributive, and the adverbial are translated, which is a grammatical translation and is a way of translation.

### Specific Embodiment 18

According to a method for directly converting between words of a speech converter, a new corresponding card is generated by artificial intelligence, and is characterized in that it is translated by artificial intelligence.

The present embodiment is further configured that: translation realized by artificial intelligence is intelligent translation, which is a method for translation.

### Specific Embodiment 19

The realizing of the word-to-word conversion by the speech converter is further characterized by realizing the script-to-script converter by an analogy method, including: complete retrieval for retrieving the match library, a method for retrieving keywords in the match library, a method for judgment and retrieval according to a subject-predicate-object relation in a short sentence, and a method for retrieving matches with same phrases as many as possible in the match library.

The present embodiment is further configured that: the analogy method for realizing the word-to-word conversion is to find out analogous matches with the match cards in the match library through retrieval and comparison methods, so as to realize a translation method of words.

### Specific Embodiment 20

The speech converter realizes the word-to-word conversion by the analogy method, which is the complete retrieval in the match library and is further characterized in that retrieved parts of the matches are completely matched matches.

The embodiment is further configured to: the retrieved corresponding search part is an exact match correspondence, and the search part is completely matched, and the matching result is a preset solution in the search library.

### Specific Embodiment 21

According to a method in which a speech converter uses an analogy method to convert between characters, a method for keyword search in a corresponding library is characterized in that all the corresponding keywords are retrieved.

This embodiment is further configured to: the corresponding keywords are all retrieved, and the sentences input by the user are not in the Chinese corresponding library, and the computer proposes sentences in the library that are similar to the input sentences for use. The person chooses to use, and the retrieval method is: the same keyword.

### Specific Embodiment 22

The speech converter realizes the word-to-word conversion by the analogy method, which is the method for judgment and retrieval according to a subject-predicate-object relation in a short sentence, and is further characterized by retrieving matches with same subjects, predicates and objects.

The present embodiment is further configured that: during retrieval of the matches with the same subjects, predicates and objects, if a sentence input by a user has no match in the Chinese word match library, the computer indicates that there are sentences basically according with the input sentence in the library for selection and use by the user. A specific retrieval method is: subject-predicate-object retrieval.

### Specific Embodiment 23

The speech converter realizes the word-to-word conversion by the analogy method, which is a method for retrieving matches with same phrases as many as possible in the match library, and is further characterized by retrieving matches with the most same phrases.

The present embodiment is further configured that: during retrieval of the matches with the most same phrases, if a sentence input by a user has no match in the Chinese word match library, the computer indicates that there are sentences basically according with the input sentence in the library for selection and use by the user. The retrieval method is that: the number of same phrases is the largest.

### Specific Embodiment 24

A speech converter includes conversion between characters, and is characterized by adding a computer, a scanner, a post-scan text conversion software, and a Chinese reading software.

This embodiment is further configured to: the computer, the scanner, the post-scan text conversion software, and the Chinese reading software are the storage devices and necessary tools of the present invention.

Working principle, first scan the text of other countries that you want to read with a scanner, and then use the scan content of the country to convert it into text conversion software, and convert it into the text of the country. Realize the conversion between words to generate Chinese, and then read it through Chinese reading software.

### Specific Embodiment 25

The speech converter is further characterized in that for the conversion method, computers, mobile phones, electrical appliance devices and networks in the aspect of hardware are added, and word recording software, voice reading software and required application software in the aspect of software are also added.

The present embodiment is further configured that: the computers, the mobile phones, the electrical appliance devices and the networks in the aspect of hardware are storage devices of the present invention. The word recording software, voice reading software and required application software in the aspect of software are necessary tools for implementing the present invention, and are installed on the hardware. Through the speech converter, a user inputs what he/she wants to say into the hardware through the software to form Chinese, and then the Chinese are converted into words of the other party through the match cards. A reader for the words of the other party reads the words in a language of the other party through the above-mentioned hardware, and this operation is performed in the opposite way, thereby realizing interaction of speech conversion.

### Specific Embodiment 26

According to a speech converter, a computer, a mobile phone, an electrical device, and a network are added in hardware, and a text entry software, a voice reading software, and an application software required for software are added, and a method for adding a corresponding card online is provided, and the feature thereof It is online for help.

This embodiment is further configured to: the online help is that the user input is in accordance with the written language, but there is no corresponding in the library, and the Internet can be used to seek help from a friend on the network, and can also ask questions, and can even ask Money please ask people to translate immediately, compile a new corresponding card, and use it immediately.

### Specific Embodiment 27

According to the speech converter, computers, mobile phones, electrical appliance devices and networks in the aspect of hardware are added, and word recording software, voice reading software and required application software in the aspect of software are also added, so that a use method for a one-to-multiple match card is characterized by displaying matches of different meanings conversely for selection by a user.

The present embodiment is further configured that: operation of displaying the matches of different meanings conversely for selection by the user is that the match cards, such as the word match card, the phrase match card, the word group match card, the short sentence match card, the useful expression match card and the one-sentence match card, include a one-to-multiple match card capable of expressing several different meanings in addition to a one-to-one match card capable of only expressing one meaning. At this time, match contents of different meanings are required to be displayed conversely to remind a typing person to make a determination, so that the typing person may determine such a match content that may accurately express own meanings and confirm the match content, and the other way round, words of other countries are required to be normalized and connected with Chinese. When the words of one country and the Chinese form the one-to-multiple match cards, a prompt will be also provided to let people from the country to select and determine the contents.

A working principle is that: a speech to be converted is input as Chinese in the hardware according to an input method. If the input speech has a match, words of the other party is directly generated. If the input speech has no match, a device judges whether the input Chinese meet word, phrase and sentence requirements of the Chinese written language or not. If NO, the device provides options for written languages of meanings that are possibly expressed by the input speech to enable a typing person to select and determine a written language from several possible written languages. If the selected speech that meets the Chinese written language has a match, words of the other party are directly generated. If the selected speech has no match, this sentence is decomposed into several short sentences. If the short sentences still have no match, these short sentences are decomposed into word groups. If the word groups still have no match, the word groups are decomposed into phrases. If the phrases still have no match, the phrases are decomposed into words. If the typing person does not want to do this because of troublesomeness, limited time or difficulty in explanation, matches with similar meanings may be found out with keywords. The device is required to provide several options of matches with multiple words that are the same as words in the speech input by the typing person, particularly matches with multiple same keywords, so that the typing person may select and determine the matches in these options to accurate express his/her meanings. If this way still fails, the typing person may surf the Internet to ask online friends for help, or ask questions, or even pay someone to translate right away to write new matches for immediate use. If these matches include a one-to-multiple match, the computer will indicate the typing person to let the typing person to select and determine a match, so that the typing person may accurately express his/her own meanings. Finally, the matched words of the other party are read in the language of the other party with a reader for the words of the other party, so as to enable the other party to understand. In return, the other party is required to answer, so that their words are also required to be normalized and connected with Chinese. When their words and Chinese form the one-to-multiple matches, the computer will indicate the other party to let the other party to select and determine the matches, and then matched words are read in mandarin with a Chinese reader. Therefore, an interaction of speech conversion is realized.

### Specific Embodiment 28

A speech converter is further characterized in that, in the above technical solution, artificial intelligence is added, including: intelligently providing reference materials, intelligence having default selection, intelligent ranking in front, and intelligence with emotion.

The embodiment is further configured to: increase the artificial intelligence, so that the speech converter knows the user's heart very well, automatically executes the program, and intelligently and voluntarily provides and solves the problem and self-improvement, among them:

The intelligent providing reference material is characterized in that a reference material is provided, and the reference material is provided. When the input user needs the reference material, the artificial intelligence of the speech converter has a reference content that meets the user's requirement.

The smart has a default selection, which is characterized by a default selection, the default selection, when the input is in need of selection, the artificial intelligence of the speech converter has the default selection that best meets the input requirements of the input.

The smart arrangement is preceded by being arranged in front, and the arrangement is on the front, when the artificial intelligence of the speech converter has no default selection, and the option that best meets the input requirements of the input is ranked first;

Intelligence has emotions, which are characterized by language emotions, which have language emotions. When the voice reading software is reading, you can know the meaning of the input person, and the voice of the recitation reflects the sensation, the emotion, and the accuracy. Express the emotions of the input, and in turn listen to others.

### Specific Embodiment 29

Artificial intelligence added according to a speech converter is characterized by automatic addition.

Artificial intelligence added for the speech converter is characterized in automatic adding. The present embodiment is further configured that: the automatic adding is that every time a match card generated by new matches is used by the user, the artificial intelligence will automatically record and add it into the match library for use at the next time.

### Specific Embodiment 30

The artificial intelligence added for the speech converter is characterized in automatic communication.

The embodiment is further configured to: the automatic communication is an artificial intelligence of the speech converter, automatically establishing an communication channel between the user and the official website of the software, and the user uses a new corresponding card, and the artificial intelligence automatically The official website of the software transmits this information to facilitate the identification of the corresponding card and the increase of the corresponding library of the website. The official website of the software also regularly upgrades the corresponding library of each speech converter, which is beneficial to the operators to serve.

A working principle is that: on the basis of the working principle of Specific Embodiment 25, the artificial intelligence is added, so that during operation of the device, the artificial intelligence enables every step to be full of intelligence and smartness, thereby improving the performance and adding functions.

### Specific Embodiment 31

The speech converter is characterized by labeling a match generation type with a color, including: a method for labeling matches confirmed by official software with specific colors, a method for displaying new matches generated by the artificial intelligence with specific colors and a method for expressing matches literally translated by a user through phrases and words with specific colors.

The present embodiment is further configured that: the labeling of a match generation type with a color is to display match cards generated by different modes with different colors.

A working principle is that: the match cards generated by different modes are displayed with different colors.

### Specific Embodiment 32

The labeling of a match generation type with a color by the speech converter is the method for labeling matches confirmed by a website with specific colors, and is further characterized by displaying the confirmed matches with specific colors.

The present embodiment is further configured that: in the method of displaying the confirmed matches with the specific colors, there are various matches in software. To visually distinguish the matches, the confirmed matches in the software are displayed with the specific colors, and then are sent to other party, so that the other party may definitely know immediately that this sentence is correct.

A working principle is that: if an expert checks that a new match is correct through the official software, the match is displayed with a specific color to definitely tell a user and a receiver that this sentence is correct.

### Specific Embodiment 33

The labeling of a match generation type with a color by the speech converter is the method for displaying the new matches generated by the artificial intelligence with the specific colors, and is further characterized by displaying the matches generated by the artificial intelligence with the specific colors.

The present embodiment is further configured that in the method of displaying the matches generated by the artificial intelligence with the specific colors, there are various matches in software. To visually distinguish the matches, the matches generated by the artificial intelligence in the software are displayed with the specific colors, and then are sent to other party, so that the other party may definitely know immediately that this sentence is translated by the artificial intelligence, and may ask anything unclear or inaccurate.

A working principle is that: a new match is automatically generated by the artificial intelligence, but no one knows whether this near match is particularly correct or not, so that this new match is displayed with the specific color to definitely tell the user and the receiver to note that the accuracy of this sentence is not confirmed by the official software.

### Specific Embodiment 34

The labeling of a match generation type with a color by the speech converter is a method for expressing matches literally translated by a user through phrases and words with specific colors, and is further characterized by displaying literally translated matches with specific colors.

This embodiment is further configured to: display the literal translation corresponding to the specific color, and there are many corresponding correspondences in the software. In order to visually distinguish, the corresponding translation is displayed in a specific color, and is displayed to the other party, and the other party immediately Clearly know that this sentence is assembled by the user himself. The content that I want to say is said, right, I don't know, the accuracy is the worst.

A working principle is that: a match literally translated by a user through words, phrases and sentences is sent to the other party after being generated, and a software website displays this match with a specific color to definitely tell a receiver that this sentence is translated by him/herself and expresses what he/she wants to say, but the user does not know if the sentence is correct.

### Specific Embodiment 35

A speech converter is further characterized by a method of collecting a corresponding card.

The embodiment is further configured to: the corresponding collection method is to give more than one time reward to all people; that is, the user provides a qualified corresponding card to the software official, and can use more than one free of charge. Corresponding cards can also be used for the corresponding use of time or traffic. Free use can also be exchanged with other users under the official management of the software.

A working principle is that: for all, anyone who provides a qualified match can use 2 matches for free or sell through the platform.

### Specific Embodiment 36

The speech converter is further characterized in its application.

The present embodiment is further configured that: by use of the methods, the steps and the technical solutions of the present invention, the application includes: application I: all words in the world may be input into languages of the computer to build a way for mutually direct word translation and speech conversion; application II: the speech converter becomes universal translation software for all words and speeches in and between all the countries; application III: the speech converter is manufactured into a native translation machine for translating one language into a language of one country and translating one language into languages of several countries; application IV: the speech converter enables dialect speakers in different places to understand each other; application V: the speech converter clears the final language barrier to make the online shopping in China become unique online shopping in the world.

A working principle: in intelligent electrical appliances, by use of the methods, the steps and the technical solutions of the present invention, large software architecture is achieved. The software architecture will become universal word and speech translation software among languages of all countries in the world as long as it is filled with readers of two countries, word matches, phrase matches, word group matches, short sentence matches, useful expression matches, one-sentence matches and the like as well as continuously supplemented word matches, phrase matches, word group matches, short sentence matches, useful expression matches, one-sentence matches and the like. This software is installed in hardware to form a translation machine.

Persons skilled in the art can implement or use the present invention through the above-mentioned description of the embodiments disclosed herein. It is obvious for the persons skilled in the art to make various modifications of these embodiments. General theories defined herein may be implemented in other embodiments without departing from the spirit or scope of the present invention. Therefore, the present invention will not be limited by these embodiments described herein, and will fall within the widest scope consistent with the theory and the novelty characteristic that are disclosed herein.

In conclusion, the present invention, as in a language system of the world, constructs a set of "international sign language" system that does not require special study to achieve the effects that: if the other party cannot understand what you said, there is a tool helping you to say what you said to the other party, thus enabling the other party to see and hear clearly; and if you cannot understand what others said, there is a tool helping him/her to say to you, thus enabling you to see and hear clearly. A "deaf-mute sign language" is that a group of deaf-mutes communicate with one another with hand gestures while saying indigestible words that they may not hear. An "international sign language" is that a group of people who say different languages type words for communication with one another with hands while saying indigestible words that they may not understand.

This software has an extremely low requirement for users. Those who understand the language and words of this country can directly use this software, so that the software is easier to popularize. The most important aspect is that the official software provides three types of translation languages and displays these languages with colors: the first one is the one, the correctness of which is confirmed by the expert; the second one is translated by the artificial intelligence; and the third one is literally translated by a user him/herself on the basis of the grammar, the correctness of which is clear. Furthermore, the other party also knows these types and translated contents under these types.

### Implementation modes of the present invention

### Industrial practicability

The speech converter may be made into software and a translation machine.

### Free contents in a sequence table

Type in paragraphs described by the free contents in the sequence table here.

## Claims

1. A speech converter, including the translation of Chinese and other official words, a word, one word, and one sentence. Its features include: forming a correspondence between words, words and sentences that accurately expresses the same meaning, producing a corresponding card, and adding the correspondence of the word group, the short sentence, the common language, and the correspondence of the words, the words and the words, and the correspondence of the words, the words, the short sentences and the common words. The corresponding card, the corresponding card, is the corresponding word, word, phrase, phrase, short sentence, common language, and one sentence of the same meaning in Chinese and the official words of the other party, and the corresponding card, word corresponding card, phrase corresponding card, short sentence corresponding card, common language corresponding card, one sentence corresponding card, and according to needs. It can generate more generalized or narrower correspondences and correspondences.
The content that needs to be translated is produced directly by word correspondence, word correspondence, phrase correspondence, short sentence correspondence, common language correspondence and one sentence correspondence; without corresponding inches, it is decomposed into several small ones, and has not yet been redivided until there is correspondence, corresponding to the other words.

2. A speech converter, according to claim 1, comprising inter-translation between Chinese and official language of the other party and connection of one word, one phrase and one sentence, and **characterized in that** further comprising: generating match cards, then adding matches of word groups, short sentences and useful expressions, and also generating match cards, wherein the match cards comprise a word match card, a phrase match card, a word group match card, a short sentence match card, a useful expression match card and a one-sentence match card which are generated by corresponding words, phrases, word groups, short sentences, useful expressions and sentences used for accurately expressing the same meanings in Chinese and the official language of the other party; and more generalized or narrower matches and match cards may also be generated as required;
a content to be translated is directly translated into words of the other party through the word match, the phrase match, the word group match, the short sentence match, the useful expression match and the one-sentence match; if no match exists, the content is decomposed into several small units; if still no match exists, the small units are decomposed again till a match is found, and then the words of the other party are displayed; and
the unidirectionality of the match cards is that one match card is generated from the Chinese to the official words of the other party, and another match card is generated from the official words of the other party to the Chinese.

3. The speech converter according to claim 1, wherein the match cards of the speech converter have the characteristic of a use mode; the use mode of the match cards is as follows: the match card from Chinese to the official words of the other party is used for translating Chinese into the official words of the other party, and the match card from the official words of the other party to the Chinese is used for translating the official words of the other party into the Chinese.

4. A speech converter, according to claim 1, the corresponding card of a speech converter, which is **characterized by** one to one correspondence and a few correspondence, with one word, a word, a phrase, a phrase, a sentence, a sentence, a sentence, a sentence which may be in and the other. In the correspondence of language, in addition to the only corresponding one-to-one correspondence that expresses only one meaning, the correspondence of several different meanings will appear, and the correspondence of all the different meanings should be listed out.

5. A speech converter, comprising match cards, and further comprising match libraries, wherein matches formed by two types of words during translation form a match library; the match library comprises an instruction match library, and sequencing is performed in the match library; the match library is formed by putting the match cards with certain features together; and the match library with a single feature also may be a sub-match library in a match library with various features;
one type of matches is generated from all Chinese to the official words of the other party, and these matches are put together to form one match library; another type of matches is generated from all official words of the other party to Chinese, and these matches are put together to form one match library; if noon is required to be translated into other languages, retrieval is performed in the Chinese word match library; and if the official language of the other party is required to be translated into Chinese, retrieval is performed in the match library from the official words of the other party to the Chinese.

6. A speech converter of claim 5, the match library formed by the matches of two types of words during translation comprises match cards, wherein the same type of match cards are put together to form the match library; the match cards comprise the word match card, the phrase match card, the word group match card, the short sentence match card, the useful expression match card and the one-sentence match card which are generated by corresponding words, phrases, word groups, short sentences, useful expressions and sentences used for accurately expressing the same meanings in Chinese and the official language of the other party; putting of the same type of match cards together to form the match library is to put all the match cards from Chinese to the official words of the other party together to form one match library, and then put all the match cards from the official words of the other party to Chinese together to form another match library, so that the two cooperating match libraries form a translation library from Chinese to words of one of other countries; and
one type of matches is generated from all Chinese to the official words of the other party, and these matches are put together to form one match library; another type of matches is generated from all official words of the other party to Chinese, and these matches are put together to form one match library; if noon is required to be translated into other languages, retrieval is performed in the Chinese word match library; and if the official language of the other party is required to be translated into Chinese, retrieval is performed in the match library from the official words of the other party to the Chinese.

7. A speech converter corresponding to a library according to the claim 5, corresponding to the library in the library, which is also **characterized by** concentrating the corresponding instructions in the corresponding library to form an instruction corresponding library; the corresponding libraries in the corresponding libraries are concentrated together to form an instruction corresponding library. It is a part of the corresponding library and has a special purpose.
In the human and electrical equipment to carry on the man-machine dialogue, the command corresponds to the corresponding instruction in the library, the electrical equipment is the most easy to understand, the electrical equipment is most accurate and quick.

8. To correspond to a speech converter, as stated in claim 5, corresponding to the sort in the library, and its characteristics are arranged in alphabetical order; the statements are arranged in alphabetical order and English in the previous corresponding arrangement should be not difficult to understand; the corresponding arrangement of Chinese in the former is arranged in alphabetical alphabet. In other countries, the correspondence of the other countries is arranged in the way of Chinese.
Each correspondence corresponds to the order of the alphabet in front of the text.

9. A speech converter including the corresponding library, whose feature is also its conversion method; the conversion method, first translated by voice to Chinese, is translated into the corresponding counterpart by the corresponding card in the library, and then read out by the other's reader by the other's reader in the other's language; It is the interaction of a voice conversion;
Words that you want to say, input into Chinese, by word correspondence, word correspondence, phrase correspondence, short sentence correspondence, common language corresponding, one sentence corresponding to produce the opposite language directly, the opposite text is read by the other party's phonetic reader and in the other side's language, let the other party hear the sound that can hear; what the other party wants to say, also this Do it once.

10. A speech converter, comprising a conversion method of the speech converter, wherein the speech converter realizes word-to-word conversion, comprising a direct word-to-word conversion and a word-to-word conversion by an analogy method; the word-to-word conversion is to translate words of two countries by using the match library; Chinese are correspondingly translated into words of the other party through the match cards in the match library; if no such match card exists, a new match card is generated through matches; words of the other party are also translated into Chinese through the match cards in the match library; if still no such match card exists, a new match card is generated through matches; and therefore, the word-to-word conversion is realized.

11. A word-to-word conversion by the speech converter according to claim 10, wherein the direct word-to-word conversion comprises: a method for directly generating words of the other party, a solution for enabling an input sentence to accord with the grammar, a literal translation method, a method for generating a new match card to determine a minimum translation unit, a sentence pattern selection method during literal translation, and a method for generating a new match card by using a literal translation mode; and the direct word-to-word conversion is a translation mode for directly obtaining a result by using the match cards in the match library; and
words of the other party are directly generated through the match cards, and the match cards are generated by a user self by the literal translation mode.

12. According to a speech converter described in the claim 11, the conversion between words is realized directly. The character is to generate the opposite text directly with the corresponding card; the corresponding card is directly generated by the corresponding card. It is the user input Chinese, the corresponding library is some, and the official text is directly corresponding to the other side through the corresponding card. The official text is also directly generated by corresponding cards.

13. In accordance with a speech converter described in the claim 11, the conversion of words is realized directly, making the input sentence conforming to the grammatical solution, and its characteristic is that the oral language is changed into written language; the spoken language is changed into written language, that is, the local language is changed into the language understood by the public, including the narration. The sentence of the user input is not corresponding to the Chinese part of the corresponding card in the Currie, and it does not correspond to the Chinese part that is basically in line with the input sentence.
The sentence that people speak, not every sentence is written language, the change of local knowledge to everyone understand all understand, including the way of narration; the sentence that the user enters, the Chinese language is not in the library, the computer puts forward the sentence that is not basically consistent with the input sentence in the library, it should be translated directly through this software, first of all, Make a sentence a sentence that is grammatical and standard.

14. The direct word-to-word conversion by the speech converter according to claim 11, wherein the direct word-to-word conversion by the speech converter is the literal translation method; geographical names and personal names are labeled; and labeling of the geographical names and the personal names has the advantage of automatic transliteration during literal translation.

15. The direct word-to-word conversion by the speech converter according to claim 11, wherein the direct word-to-word conversion by the speech converter is the method for generating a new match card to determine a minimum translation unit, wherein a sequence of a short sentence, a word group, a phrase and a word is followed and is generated according to a rule from large to small; the sequence is a preferable sequence of translation units or single words; during generation of a new sentence match card, if a new sentence contains a short sentence of a short sentence match card, firstly, the short sentence is the minimum unit, so that translation is performed with the short sentence match card; if the new sentence contains a word group of a word group match card, the word group is the minimum unit, so that translation is performed with the word group match card in the match library; if the new sentence contains a phrase of a phrase match card, the phrase is the minimum unit, so that translation is performed with the phrase match card in the match library; finally, the word is the minimum unit, so that translation is performed with a word match card; and all the minimum units are connected together according to the original sequence, thereby generating the new sentence match card; and
if no new match is retrieved in the match library, new matches are required to be created; during creating of new sentence matches, the sequence of the short sentence, the word group, the phrase and the word generated according to the rule from large to small is followed, which is a preferable sequence of translation units or single words; if a short sentence match exists, short sentences, word groups in the match library, then phrases in the match library and finally words are used in sequence.

16. The direct word-to-word conversion by the speech converter according to claim 11, wherein the direct word-to-word conversion is the sentence pattern selection method during literal translation, wherein a sentence pattern is selected for an input sentence; and during generation of the new match card, the sentence pattern is selected for the input sentence, so as to improve the accuracy of the literal translation.

17. According to a speech converter described in the claim 11, the translation of the text is realized directly. The method of generating a new corresponding card by direct translation is also translated with the subject, predicate, object, attributive and adverbial, and the translation is grammatical translation with the subject, predicate, object, attributive and adverbial. Away of translating.

18. According to a speech converter described in the claim 11, the conversion of the text is realized directly. The method of generating a new corresponding card by artificial intelligence is used to translate it with artificial intelligence. The translation is an intelligent translation, and it is a method of translation.

19. The word-to-word conversion by the speech converter according to claim 10, wherein the word-to-word conversion by an analogy method comprises: complete retrieval for retrieving the match library, a method for retrieving keywords in the match library, a method for judgment and retrieval according to a subject-predicate-object relation in a short sentence, and a method for retrieving matches with same phrases as many as possible in the match library; and the analogy method for realizing the word-to-word conversion is to find out analogous matches by using the match cards in the match library through retrieval and comparison methods, so as to realize a translation method of words.

20. A speech converter based on the claim 19 is used to convert the text by analogy, and the retrieval is complete retrieval, and its feature is to retrieve the corresponding retrieval part to be a complete match; the retrieval part of the retrieval is the corresponding matching, and the retrieval part is completely matched. The matching result is the matching result, and the matching result is to retrieve the preset scheme in the library.

21. A speech converter, as described in the claim 19, uses an analogical method to convert words between words, and a method for keyword retrieval in the corresponding repository. Its feature is to retrieve all the same keywords of the key words; the same keyword is retrieved all out, the user input the sentence, The computer proposes a sentence that is approximately consistent with the input sentence in the library, which is used by the user. The retrieval method is the same of the key words.

22. The word-to-word conversion by the speech converter by the analogy method according to claim 19, wherein the method for judgment and retrieval according to a subject-predicate-object relation in a short sentence also comprises retrieving matches with same subjects, predicates and objects; during retrieval of the matches with the same subjects, predicates and objects, if a sentence input by a user has no match in the Chinese word match library, the computer indicates that there are sentences basically according with the input sentence in the library for selection and use by the user; and a specific retrieval method is: subject-predicate-object retrieval.

23. The word-to-word conversion by the speech converter by the analogy method according to claim 19, wherein the method for retrieving matches with same phrases as many as possible in the match library also comprises retrieving matches with the most same phrases; during retrieval of the matches with the most same phrases, if a sentence input by a user has no match in the Chinese word match library, the computer indicates that there are sentences basically according with the input sentence in the library for selection and use by the user; and the retrieval method is that: the number of same phrases is the largest.

24. A speech converter, which includes the conversion between words, which is also **characterized by** adding computers, scanners and their scanned text conversion software, and Chinese reading software. The added computer, scanner and its scanned text conversion software and Chinese reading software are the storage equipment and necessary tools of the invention. ;
First of all, the text of other countries that you want to read is scanned by a scanner, and then the translation software of the country's scanning content is converted into a text conversion software and converted into the text of its country. The text will be translated into Chinese by the conversion between the two countries, and then read through the Chinese reading software.

25. A speech converter, adding computers, mobile phones, electrical appliance devices and networks in the aspect of hardware and adding word recording software, voice reading software and required application software in the aspect of software with respect to the conversion method, wherein the computers, the mobile phones, the electrical appliance devices and the networks in the aspect of hardware are storage devices of the present invention; the word recording software, voice reading software and required application software in the aspect of software are necessary tools for implementing the present invention, and are installed on the hardware; in the speech converter, a user inputs what he/she wants to say into the hardware through the software to form Chinese, and then the Chinese are converted into words of the other party through the match cards; and a reader for the words of the other party reads the words in a language of the other party through the above-mentioned hardware, and this operation is performed in the opposite way, thereby realizing interaction of speech conversion, thereby realizing interaction of speech conversion.

26. According to a speech converter described in the claim 25, the computer, cell phone, electrical equipment and network are added to the hardware, and the software, the voice reading software, and the required application software are added to the software. It is the user input in line with the written language, but in the corresponding library, not in the Internet, to the Internet, to the Internet friends for help, also can ask, more money can be asked for immediate translation, a new corresponding card, immediately used.
Specific example 27

27. A use method for a one-to-multiple match card for the speech converter adding computers, mobile phones, electrical appliance devices and networks in the aspect of hardware and adding word recording software, voice reading software and required application software in the aspect of software according to claim 10, displaying matches of different meanings conversely for selection by a user, wherein the operation of displaying the matches of different meanings conversely for selection by the user is that the match cards, such as the word match card, the phrase match card, the word group match card, the short sentence match card, the useful expression match card and the one-sentence match card, comprise a one-to-multiple match card capable of expressing several different meanings in addition to a one-to-one match card capable of only expressing one meaning; at this time, match contents of different meanings are required to be displayed conversely to remind a typing person to make a determination, so that the typing person may determine such a match content that may accurately express own meanings and confirm the match content, and conversely, words of other countries are required to be normalized and connected with Chinese; and when the words of one country and the Chinese form the one-to-multiple match cards, a prompt will be also provided to let people from the country to select and determine the contents; and
a speech to be converted is input as Chinese in the hardware according to an input method; if the input speech has a match, words of the other party is directly generated; if the input speech has no match, a device judges whether the input Chinese meet word, phrase and sentence requirements of the Chinese written language or not; if NO, the device provides options for written languages of meanings that are possibly expressed by the input speech to enable a typing person to select and determine a written language from several possible written languages; if the selected speech that meets the Chinese written language has a match, words of the other party are directly generated; if the selected speech has no match, this sentence is decomposed into several short sentences; if the short sentences still have no match, the short sentences are decomposed into word groups; if the word groups still have no match, the word groups are decomposed into phrases; if the phrases still have no match, the phrases are decomposed into words; if the typing person does not want to do this because of troublesomeness, limited time or difficulty in explanation, matches with similar meanings may be found out with keywords; the device is required to provide several options of matches with multiple words that are the same as words in the speech input by the typing person, particularly matches with multiple same keywords, so that the typing person may select and determine the matches in these options to accurate express his/her meanings; if this way still fails, the typing person may surf the Internet to ask online friends for help, or ask questions, or even pay someone to translate right away to write new matches for immediate use; if these matches comprise a one-to-multiple match, the computer will indicate the typing person to let the typing person to select and determine a match, so that the typing person may accurately express his/her own meanings; finally, the matched words of the other party are read in the language of the other party with a reader for the words of the other party, so as to enable the other party to understand; in turn, the other party is required to answer, so that their words are also required to be normalized and connected with Chinese; when their words and Chinese form the one-to-multiple matches, the computer will indicate the other party to let the other party to select and determine the matches, and then matched words are read in mandarin with a Chinese reader; and therefore, an interaction of speech conversion is realized.

28. A speech converter, which is **characterized by** the addition of artificial intelligence on the above technical scheme, including intelligent reference data, intelligence with default selection, intelligent arrangement before, intelligent with emotion; and the added artificial intelligence is to let the speech converter understand the user's heart and execute automatically. Process, and provide and solve problems and self perfection intelligently and repeatedly.
The intelligence provides reference data, which is **characterized by** providing reference data, and providing reference data. When the input needs reference, the artificial intelligence of the speech converter has a reference content that meets the requirements of the user.
The default selection is **characterized by** default selection, the default selection, the default selection. When the input is in need, the artificial intelligence of the speech converter has the default choice that is most consistent with the input required.
In front of the intelligent arrangement, its characteristics lie in the front of the arrangement, and before the arrangement, it is when the artificial intelligence of the speech converter does not have the default choice, and there will be the option of the option that is most consistent with the requirement of the input. Intelligence has emotion, its characteristics lie in language emotion, and it has language emotion. When the voice reading software is reading, it can know the meaning of the input. The recited voice reflects the emotion of the speaker and the emotion of the input. In turn, the other people say the same.

29. A speech converter, adding artificial intelligence in the above technical solution of claim 28, wherein the artificial intelligence comprises: intelligent supply of reference material, intelligence default selection, intelligence ranking in front, and intelligent emotion; the adding of artificial intelligence is to enable the speech converter to understand a heart of the user, to automatically execute the program and to solve the problems and perform self-improvement intelligently and developmentally, wherein
intelligent supply of reference material has the feature of supply of reference material; the supply of reference material means that, when the typing person needs reference material, the artificial intelligence of the speech converter supplies reference contents which satisfy the requirements of the user;
the intelligence default selection has the feature of default selection; the default selection means that, when the typing person needs to select, the artificial intelligence of the speech converter has a default selection which satisfies the requirements of the typing person most;
intelligence ranking in front has the feature of ranking in front; and the ranking in front means that, when artificial intelligence of the speech converter has no default selection, the artificial intelligence of the speech converter has an option, ranking in front, which satisfies the requirements of the typing person most;
the intelligent emotion has the feature of language emotion; the language emotion means that, when the voice reading software reads, the voice reading software can know the meaning of the typing person; the voice of recitation reflects cadence and affectionateness, so as to accurately express the emotion of the typing person; and the case is the same as listening to others; and
the automatic adding means that, every time a match card generated by new matches is used by the user, the artificial intelligence will automatically record and add the match card into the match library for use at the next time.

30. The artificial intelligence which is added to a speech converter described by the claim 28 is **characterized by** automatic communication; the automatic communication is the artificial intelligence of the speech converter, which automatically establishes a communication channel between the user and the official website of the software, the user uses a new corresponding card, and the artificial intelligence is automatically directed. The official website of the software delivers this information to facilitate the identification of the corresponding card and the increase of the corresponding library. The official website of the software also regularly updates the corresponding library of each speech converter to help the operators to take good service.

31. A speech converter, labeling a match generation type with a color, comprising: a method for labeling matches confirmed by official software with specific colors, a method for displaying new matches generated by the artificial intelligence with specific colors and a method for expressing matches literally translated by a user through phrases and words with specific colors, wherein the labeling of a match generation type with a color is to display match cards generated by different modes by using different colors.

32. The labeling of a match generation type with a color by the speech converter according to claim 31, wherein the method for labeling matches confirmed by a website with specific colors also comprises displaying the confirmed matches with specific colors; in the method of displaying the confirmed matches with the specific colors, various matches exist in software; to visually distinguish the matches, the confirmed matches in the software are displayed with the specific colors, and then are sent to other party, so that the other party may definitely know immediately that this sentence is correct; and

33. A new method of displaying a particular color for the application of a color identity based on a speech converter described by the claim 31, which is produced by artificial intelligence, is also **characterized by** a corresponding display of artificial intelligence in a particular color; the description is shown in a specific color to show the artificial intelligence generated in the software. There are many kinds of correspondence, in order to make a visual difference, the corresponding of the artificial intelligence generated by the software in the software is displayed and sent to each other. The other party immediately knows clearly that this sentence is an artificial intelligence translation, or is there an unclear and inaccurate place that can be asked.

34. A speech converter, as described in claim 31, uses color identification to correspond to the type of generation, the method of expressing itself through words and words to the application specific color. The feature is also in a specific color to display a literal translation. In order to make a visual difference, use a specific color to translate the literal translation into the software, display it and send it to each other. The other party immediately knows it clearly. This sentence is the user's own assembly, the content is said, right, unaware, the worst.

35. a speech converter whose feature also lies in the collection method of the corresponding card; the corresponding collection method is for all people, giving more than 1 times the reward; that is, the user provides a qualified corresponding card to the software official, and can use more than 1 corresponding cards for free, or the corresponding use inch or the corresponding use. Traffic, free of charge, can also be exchanged with other users under the official management of the software.
For everyone, providing a qualified correspondence, you can use 2 matches free of charge or sell them through the platform.

36. A speech converter, having an application, wherein by use of the methods, the steps and the technical solutions, the application comprises: all words in the world may be input into languages of the computer to build a way for mutually direct word translation and speech conversion; and the speech converter becomes universal translation software for all words and speeches in and between all the countries; use three, make one country language of the cost country, a translator of several languages of several countries; use four, make intercommunication between two different local dialects; use five, China's online shopping to become the world's only net purchase to pass the last language barrier; and
in intelligent electrical appliances, by use of the methods, the steps and the technical solutions of the present invention, large software architecture is achieved; the software architecture will become universal word and speech translation software among languages of all countries in the world as long as the software architecture is filled with readers of two countries, word matches, phrase matches, word group matches, short sentence matches, useful expression matches and one-sentence matches and is continuously supplemented with word matches, phrase matches, word group matches, short sentence matches, useful expression matches and one-sentence matches; and the software is installed in hardware to form a translation machine.
